# NEUE EUROPÄISCHE PATENTSCHRIFT

(11) **EP 1 384 610 B2**
(45) Veröffentlichungstag und Bekanntmachung des Hinweises auf die Entscheidung über den Einspruch: **17.07.2019**
(45) Hinweis auf die Patenterteilung: 23.05.2007
(21) Anmeldenummer: 03016868.6
(22) Anmeldetag: 24.07.2003
(51) Int. Cl.: B60J 7/00, B60J 7/14

(54) **Dachkonstruktion für Fahrzeuge**
Roof construction for vehicle
Construction de toit pour véhicule

(30) Priorität: 26.07.2002 DE 10234282; 11.09.2002 DE 10242440
(43) Veröffentlichungstag der Anmeldung: 28.01.2004
(73) Patentinhaber: PARAT Beteiligungs GmbH, 94089 Neureichenau (DE)
(72) Erfinder: Schönenbach, Heinz, 42897 Remscheid (DE)
(74) Vertreter: Roche, von Westernhagen & Ehresmann

(56) Entgegenhaltungen:
- DE-A- 19 755 254
- DE-C- 19 720 000
- US-A- 5 490 709
- US-A- 5 810 422
- US-A1- 2001 040 385

## Beschreibung

Die Erfindung betrifft eine Dachkonstruktion für Fahrzeuge gemäß dem Oberbegriff des Anspruches 1. Eine solche Dachkonstruktion ist aus US 5490709 A bekannt.

Derartige Dachkonstruktionen werden auch als "Vario-Dächer" bezeichnet, da sie formstabil ausgebildete Dachelemente aufweisen, die bei in Gebrauchsstellung befindlicher Dachkonstruktion ein festes, stabiles Dach nach Art eines Coupe bieten. Falls sich die Dachkonstruktion in ihrer Nicht-Gebrauchsstellung befindet, ist das Kraftfahrzeug als Cabrio ausgebildet, wobei die Dachkonstruktion komprimiert, zusammengefaltet oder zusammengelegt, in einem Heckbereich des Kraftfahrzeugs, beispielsweise im Bereich des Kofferraums, aufgenommen ist.

Üblicherweise besteht die Dachkonstruktion aus einem Hinterteil mit Heckscheibe, welches die Rückwand der Dachkonstruktion bildet sowie einem Mittelteil und einem Vorderteil, die gemeinsam die Dachwand der Dachkonstruktion bilden. Auf eine derartige Dachkonstruktion mit insgesamt drei Dachelementen, von denen eines eine Rückwand und zwei die Dachwand bilden, ist die vorliegende Erfindung jedoch nicht beschränkt. Die Zahl der Dachelemente ist vielmehr beliebig.

Die bekannten Dachkonstruktionen des Standes der Technik weisen üblicherweise ein Lenker-Gestänge auf, welches aus einer Vielzahl von Einzelelementen besteht. Üblicherweise sind die zu zwei Lenker-Strängen zusammengefassten Elemente des Lenker-Gestänges an den beiden seitlichen Rändern der Dachkonstruktion angeordnet, wobei dem jeweiligen Dachelement jeweils an seinem, bezogen auf die Fahrzeugmitte, äußeren Ende ein Einbauraum für die Elemente des Lenker-Gestänges zugeordnet ist.

Die Aufgabe der Erfindung besteht darin, eine Dachkonstruktion der bekannten Art insbesondere hinsichtlich ihrer inneren Optik sowie auch hinsichtlich ihrer Schall- sowie Temperaturisolierung zu verbessern.

Die Erfindung löst diese Aufgabe mit den Merkmalen des Anspruches 1.

Das Prinzip der Erfindung besteht somit darin, dem Lenker-Gestänge, welches relativ zu dem Dachelement bewegbar ist, nach Art einer Abdeckung einen Werkstoffbereich zuzuordnen, welcher verlagerbar ist. Für den Fall, dass sich die Dachkonstruktion in ihrer Gebrauchsstellung befindet, in einer Position also, in der das Dach die Fahrgastzelle überspannt, ist das Lenker-Gestänge üblicherweise flachliegend, dem Dachelement unmittelbar benachbart, an diesem angeordnet. Wird die Dachkonstruktion aus ihrer Gebrauchsstellung in eine Nicht-Gebrauchsstellung überführt, in der die Dachkonstruktion beispielsweise vollständig in einem rückwärtigen Aufbewahrungsraum des Kfz untergebracht ist, wird hierfür eine relativ komplizierte Bewegung der einzelnen Lenker des Lenker-Gestänges vollführt. Hierzu sind insbesondere Kulissensteuerungen und Kniehebelgelenke vorgesehen.

Bei dieser Verlagerungsbewegung bewegen sich die Elemente des Lenker-Gestänges jedoch zwangsläufig von dem Dachelement weg und aus dem für sie vorgesehenen Einbauraum im Bereich des Dachelementes zumindest teilweise heraus.

Während der Stand der Technik den Innenhimmel des Dachelementes üblicherweise kurz vor dem Lenker-Gestänge enden lässt, derart, dass ein Spalt für das Lenker-Gestänge gebildet wird, um eine Bewegung des Lenker-Gestänges zu ermöglichen, ist erfindungsgemäß nunmehr vorgesehen, dass der Innenhimmel bei in Gebrauchsposition befindlicher Dachkonstruktion das Lenker-Gestänge abdeckt und auf diese Weise unmittelbar bis an die Kfz-Seitenwand bzw. bis an den Dichtungsbereich am seitlichen äußeren Ende der Dachkonstruktion heranreicht. Dadurch dass ein Werkstoffbereich vorgesehen ist, der verlagerbar ist, wird eine Freigabe des Lenker-Gestänges ermöglicht, wenn eine Überführung der Dachkonstruktion aus ihrer Gebrauchsstellung in die Nicht-Gebrauchsstellung vorgenommen werden soll.

Vorteilhafterweise ist der Werkstoffbereich integraler Bestandteil des Innenhimmels, wobei vorgesehen sein kann, dass der Werkstoffbereich nicht vollflächig an der Innenseite des Dachelementes befestigt ist, so dass dieser bei Verlagerung eine lose Schlaufe oder mehrere lose Schlaufen bilden kann.

Gemäß einer vorteilhaften Ausgestaltung der Erfindung ist der Werkstoffbereich im wesentlichen entlang einer Fahrzeugquerrichtung verlagerbar. Auf diese Weise wird eine in geometrischer Hinsicht besonders einfache Bauweise möglich, die dafür sorgt, dass die üblicherweise entlang der beiden Längsseiten der Dachkonstruktion angeordneten Lenker-Gestänge praktisch unverändert von der bekannten Dachkonstruktion her übernommen werden können. Außerdem wird in besonders effizienter Weise für eine Verlagerung des Werkstoffbereiches gesorgt.

Schließlich wird durch diese Ausgestaltung der Erfindung auch erreicht, dass eine Betätigungsvorrichtung für den Werkstoffbereich, also beispielsweise ein Gestänge, ein Baudenzug, ein Seilzug oder ähnliches nicht unmittelbar zwingend an den beiden Strängen des Lenker-Gestänges angeordnet sein muss, sondern beispielsweise innerhalb des Dachelementes, also zwischen dessen Außenhaut und dem Innenhimmel angeordnet sein kann. Auf diese Weise kann eine derartige Betätigungsvorrichtung für den Werkstoffbereich beispielsweise von einem Dämmschaum, der das Dachelement innen ausfüllt, mit umschäumt werden und somit vollständig versteckt angeordnet werden, ohne dass irgendwelche Elemente für eine Verstellvorrichtung des Werkstoffbereiches in Bewegungsbahnen von Elementen des Lenker-Gestänges hineinragen und derartige Bewegungen stören könnten.

In diesem Zusammenhang ist es besonders vorteilhaft, wenn dem Dachelement eine gesonderte Einrichtung zur Verlagerung des Werkstoffbereiches zugeordnet ist. Eine gesonderte Einrichtung kann für eine besonders optimierte Verlagerungsbewegung des Werkstoffbereiches sorgen. Außerdem kann eine derartige gesonderte Einrichtung auf einfache Weise ansteuerbar, also betätigbar ausgestaltet werden.

Gemäß einer vorteilhaften Ausgestaltung der Erfindung rafft die Einrichtung den Werkstoffbereich bei dessen Überführung von der Ruheposition in die Arbeitsposition. Auf diese Weise wird eine besonders platzsparende Unterbringung des Werkstoffbereiches derart möglich, dass nur ein geringer Ausweichraum für den Werkstoffbereich bereitgestellt werden muss, da dieser aufgrund der Raffung, also aufgrund einer Überführung in einen Zustand, in dem der Werkstoffbereich gefaltet oder einfach bzw. mehrfach umgelegt ist, besonders platzsparend in seiner Arbeitsposition aufbewahrt wird.

Gemäß einer weiteren vorteilhaften Ausgestaltung der Erfindung weist die Einrichtung ein zwischen einer fahrzeugseitig äußeren und einer fahrzeugseitig inneren Position verfahrbares Steuerelement, insbesondere einen Steuerflansch auf. Der Steuerflansch kann als Bestandteil der Einrichtung ebenfalls zwischen dem Innenhimmel des Dachelementes und dessen Außenhaut, für einen Betrachter nicht erkennbar, angeordnet sein. Durch das Vorsehen eines Steuerflansches kann dabei dafür gesorgt werden, dass eine besonders genaue Positionierung des Werkstoffbereiches möglich wird. Außerdem ermöglicht das Vorsehen eines derartigen Steuerflansches eine besonders gut kontrollierbare Bewegung des Werkstoffbereiches sowie das Einstellen von besonderen Kraftverhältnissen bzw. Drehmomentverhältnissen, die eine Auslegung der Dachkonstruktion ermöglichen, die eine lange Lebensdauer und Wartungsfreiheit gewährleistet.

Unter im wesentlichen formsteif ausgebildeten Dachelementen im Sinne der Erfindung werden solche Dachteile verstanden, die in sich stabil und steif, insbesondere aus Metallblech- oder Kunststoffelementen gebildet sind, im Unterschied zu Dachteilen von mit flexiblem Bezugsstoff versehenen sogenannten Soft-Tops herkömmlicher Cabriolets. Vorzugsweise weist die erfindungsgemäße Dachkonstruktion zwei oder mehrere feste Dachteile auf, die in ihrem Verhältnis relativ zueinander, insbesondere bei einem Öffnungs- oder Schließvorgang des Verdeckes, beweglich angeordnet sind, sei es schwenkbar, klappbar oder auch höhen- bzw. seitenverschieblich.

Ergänzend sei angemerkt, daß entsprechend der Erfindung der Werkstoffbereich von einem zumindest partiell vornehmlich an den Längsseitenrändern des Verdeckes biegeschlaffen Innenhimmel gebildet ist, dessen Randbereiche relativ zu den Gestängeelementen bzw. relativ zu einem dachteilfesten Widerlager derart beweglich angeordnet sind, daß sie mit der Schließbewegung des Verdecks in Überdeckung zu den Spalten für die Gestängeelemente bewegbar sind und diese Spalte abdecken. Dadurch werden die Gestängeelemente der Sicht vom Innenraum des Fahrzeuges her entzogen und die bislang vorhandene Spalte auch in wärme- und schalltechnischer Hinsicht vollkommener abgedeckt.

Gemäß einer Ausgestaltung des erfindungsgemäßen Prinzips können die seitlichen Randbereiche des Innenhimmels über Zugmittel, insbesondere über biegeschlaffe Zugmittel, wie Bänder, Kordeln oder Seile oder aber auch über Gummizüge mit Gestängeelementen das Verdeckgestells derart gekuppelt sein, daß die seitlichen Randbereiche des Innenhimmels über diese Zugmittel bei Schließen des Verdeckes den Spalt verschließend bewegt werden. Demgegenüber geben beim Öffnen des Verdeckes die Zugmittel in Folge von Erschlaffung die seitlichen Himmelpartien frei, die dem zufolge den Bewegungsspielraum der Gestängeelemente nicht behindern oder gar blockieren.

Zweckmäßig und im Rahmen der Erfindung vorteilhaft ist es, wenn den Randbereichen des Innenhimmels jeweils mindestens ein im wesentlichen biegeschlaffes Formteil zugeordnet ist, an dem das wenigstens eine Zugmittel angreift. Dieses Formteil ist vorzugsweise auf der dem Innenraum des Fahrzeugs abgewandten Seite des Innenhimmels an diesem befestigt, insbesondere mit ihm vernäht, verklebt oder vernietet.

Der Vorteil dieser Anordnung besteht darin, dass die Zugmittel nicht unmittelbar am biegeschlaffen Himmelstoff angreifen, sondern an dem diesen bewehrenden Formteil, wodurch sich die Kräfte günstiger auf den Himmelstoff übertragen lassen und durch nur wenige Anlenkungen, mindestens eine zugfeste Anlenkung große Flächenbereiche des Himmelstoffs sich in der gewünschten Richtung bewegen lassen. Dies ist deshalb wichtig und von Vorteil, da es sich bei den zu bewegenden Himmelpartien um schmale, jedoch relativ langgestreckte Seitenstreifen handelt.

Wichtig im Zusammenhang der Erfindung ist es, dass die Spannung, mit der die seitlichen Randbereiche des Innenhimmels in ihrer spaltverschließende Position gehalten werden, nachlassen, sobald das Verdeck seine Öffnungsbewegung beginnt oder spätestens jedenfalls dann, sobald bewegte Gestängeelemente beginnen, aus dem für ihre Unterbringung bestimmten Spalt auszutreten. Wichtig ist es zu verhindern, dass alle Gestängeteile beim Öffnen des Verdecks mit dem Innenhimmel in nachteiligen Kontakt treten können.

Eine weitere Lösung, die alternativ oder auch kumulativ mit der zunächst beschriebenen erfindungsgemäß angewandt werden kann, besteht darin, dass der Werkstoffbereich, insbesondere die seitlichen Randpartien des biegeschlaffen Innenhimmels in der Schließstellung des Verdecks durch eine Magnetanordnung spaltabdeckend bzw. spaltverschließend gehalten ist. Dabei kann dachteilfest ein Blecheinleger oder ein Magnetstreifen am Randbereich des Innenhimmels an- oder in diesen eingearbeitet sein, wohingegen dem entsprechend ein ferromagnetischer Metallstreifen bzw. ein Magnetstreifen dachteilfest angeordnet ist.

Statt durchgehender Blech- und/oder Magnetstreifen ist es selbstverständlich auch möglich, mehrere kleinere solcher Elemente in Abständen zueinander anzuordnen. Wichtig ist, dass beim Schließen des Klapptops die seitlichen Ränder des Himmels mittels 'Magnetverschluss' - und das heißt grundsätzlich selbsttätig - in eine Position gelangen und in ihr gehalten werden, in der die Ränder den Spalt zur Unterbringung von Gestängeelementen abdecken.

Diese Lösung kann, wie ausgeführt, isoliert angewendet werden, d.h. ohne zusätzliche, die Randbereiche des Innenhimmels durch Zugkräfte bewegende Zugelemente oder aber auch zusammen mit diesen. Im erstgenannten Fall ist die Anordnung und Zuordnung der Teile der Magnetanordnung so zu treffen, dass die Randbereiche des Innenhimmels zumindest gegen Ende des Schließvorgangs des Verdecks selbsttätig an die dachteilfeste Konstruktion gelangen, so dass sich die Teile der Magnetanordnung selbsttätig schließen können.

Bei der eingangs genannten Anordnung mittels Zugelementen ist es zusätzlich möglich, den endgültigen Verschluss des Gestänge-Spaltes durch den Innenhimmel mit einer Magnetanordnung wie beschrieben zu unterstützen.

Zur Verbesserung der Temperatur- und Schallisolierung können die Innenseiten der Dachteile und/oder die zu diesen hinweisenden Flächen des Innenhimmels mit Dämmmaterialien verkleidet sein. Hier kommt insbesondere auch eine im wesentlichen flächenhafte Hinterschäumung mit einem PUR-Gießharzsystem in Betracht.

Weitere Vorteile ergeben sich aus den nicht zitierten Unteransprüchen sowie anhand der nun folgenden Beschreibung eines in den Figuren dargestellten Ausführungsbeispiels. Darin zeigen:
- Fig. 1: schematisch eine teilgeschnittene Seitenansicht eines Kraftfahrzeuges mit einer erfindungsgemäßen Dachkonstruktion,
- Fig. 2: etwa gemäß einem Ansichtspfeil II in Fig. 1 die Dachkonstruktion in Einzeldarstellung in Draufsicht,
- Fig. 3: in vergrößerter Darstellung einen Ausschnitt gemäß Ausschnittskreis III in Fig. 2 eines Verbindungsbereiches zwischen einem ersten und einem zweiten Dachelement der Dachkonstruktion in Unteransicht,
- Fig. 4: den Verbindungsbereich gemäß Fig. 3 mit in Arbeitsposition befindlichem Werkstoffbereich,
- Fig. 5: in schematischer, perspektivischer, abgebrochener Ansicht einen Verbindungsbereich zwischen der erfindungsgemäßen Dachkonstruktion und der Fahrzeug-Karosserie mit in Ruheposition befindlichem Werkstoffbereich,
- Fig. 6: in einer Darstellung gemäß Fig. 5 die Dachkonstruktion mit in Arbeitsposition befindlichem Werkstoffbereich,
- Fig. 7: und 8 in Darstellungen gemäß den Fig. 5 und 6 die erfindungsgemäße Dachkonstruktion, bei der der Übersichtlichkeit halber der Innenhimmel und der Werkstoffbereich weggelassen worden sind,
- Fig. 9: eine schematische schaubildliche Ansicht eines drei, relativ zueinander bewegbare, feste Dachteile umfassenden Klappverdecks,
- Fig. 10: eine der Fig. 9 entsprechende Darstellung des Verdecks mit teilweise voneinander wegbewegten festen Dachteilen,
- Fig. 11: eine Seitenansicht der teilgeöffneten Klappverdeckanordnung der Fig. 10,
- Fig. 12: einen Teilquerschnitt durch ein Klappverdeck etwa entsprechend der Schnittlinie A-A in Fig. 9,
- Fig. 13: eine entsprechende Darstellung zur Veranschaulichung einer abweichenden Ausführungsform und
- Fig. 14: einen Schnitt entsprechend Fig. 12 und 13 zur Darstellung des Standes der Technik.

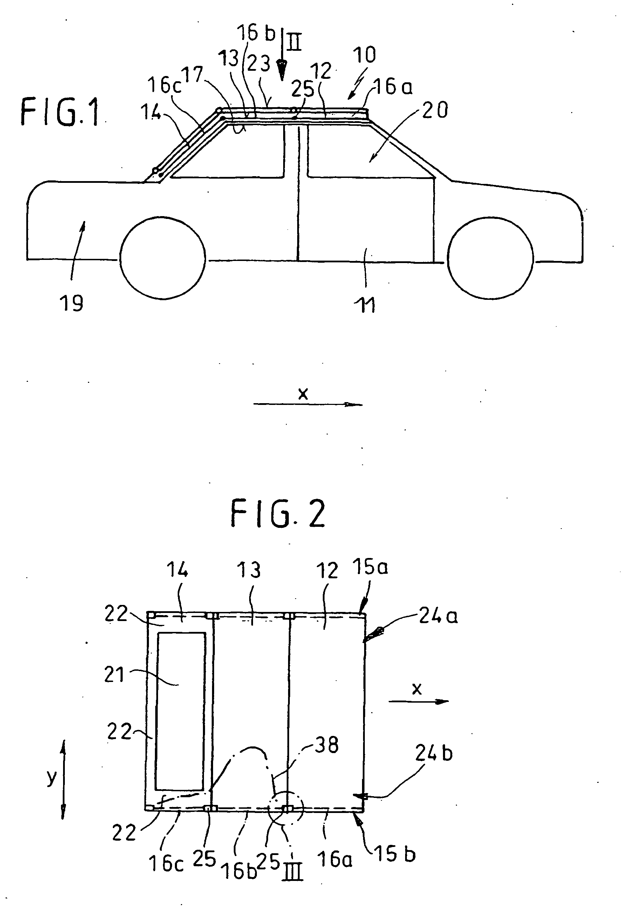

Fig. 1 zeigt schematisch die in ihrer Gesamtheit mit 10 bezeichnete Dachkonstruktion eines Kraftfahrzeuges 11. Es wird bereits aus der schematischen Darstellung deutlich, dass die Dachkonstruktion 10 aus einem vorderen Dachelement 12, einem mittleren Dachelement 13 und einem hinteren Dachelement 14 besteht. Die drei Dachelemente 12, 13, 14 sind relativ zueinander beweglich. Die Dachkonstruktion 10 ist in Fig. 1 in ihrer Gebrauchsstellung dargestellt und kann in eine nicht dargestellte Ruheposition oder Nicht-Gebrauchsstellung verlagert werden, in der die gesamte Dachkonstruktion 10 in einem hinteren Bereich 19 des Kraftfahrzeuges 11, also beispielsweise im Bereich des Kofferraumes, komprimiert, insbesondere zusammengefaltet, angeordnet ist. In dieser Nicht-Gebrauchsposition sind die drei Dachelemente 12, 13, 14 übereinandergelagert, so dass die Fahrgastzelle 20 insgesamt nach oben freigegeben ist und das Kfz 11 ein Cabrio darstellt.

Im Gegensatz zu flexiblen Verdecken, bei denen die Dachkonstruktionen im wesentlichen aus Spriegeln und einem flexiblen Verdeckstoff bestehen, handelt es sich bei der Erfindung um eine Dachkonstruktion 10, die wenigstens ein formsteif oder formstabil ausgebildetes Dachelement aufweist. Beim Ausführungsbeispiel gemäß den Figuren 1 bis 8 sind sämtliche drei Dachelemente 12, 13, 14 formstabil ausgebildet und nach Art einer Schale aufgebaut.

Das hintere Dachelement 14 weist eine Heckscheibe 21 auf, die von Randbereichen 22 im wesentlichen vollständig umrandet ist. Die beiden vorderen und mittleren Dachelemente 12 und 13 sind im wesentlichen durchgängig ausgebildet und weisen eine in Fig. 1 lediglich schematisch angedeutete Außenhaut 23, insbesondere eine metallische Außenhaut, und einen Innenhimmel 17 auf. Zwischen Außenhaut 23 und Innenhimmel 17 befindet sich üblicherweise ein Dämmstoff, beispielsweise eine Hinterschäumung mit einem PUR-Gießharz. Selbstverständlich kommen auch andere Dämmmaterialien in Betracht.

Um die Dachelemente 12, 13, 14 von einer Nicht-Gebrauchsposition in eine Gebrauchsposition zu überführen, ist ein Lenker-Gestänge 15 vorgesehen.

Das Lenker-Gestänge 15 weist eine Vielzahl von Einzelteilen auf, die auf relativ komplizierte Weise relativ zueinander bewegbar sind. Das Lenker-Gestänge 15 weist dabei beispielsweise Zwangssteuereinrichtungen, eine Vielzahl von Gelenkanordnungen und Längsstreben auf, die dafür sorgen, dass die Dachkonstruktion 10 auf geeignete Weise zwischen ihren beiden Stellungen verfahrbar ist. Typischerweise besteht das Lenker-Gestänge 15 aus zwei Teilsträngen 15a, 15b, die in Fig. 2 gestrichelt dargestellt sind. Die Teilstränge 15a, 15b verlaufen an den beiden äußeren seitlichen Bereichen 24a, 24b der Dachkonstruktion 10.

Der Übersichtlichkeit halber sind in den Figuren Gestängeteile 16a, 16b und 16c angedeutet, die miteinander durch Gelenke 25 verbunden sind. Jedes Lenker-Element 16a, 16b, 16c ist im wesentlichen langgestreckt ausgebildet, an dem bezüglich des Kraftfahrzeuges seitlich äußeren Randbereich 24 der Dachkonstruktion 10 angeordnet und relativ zu dem jeweiligen Dachelement 12, 13, 14 bewegbar.

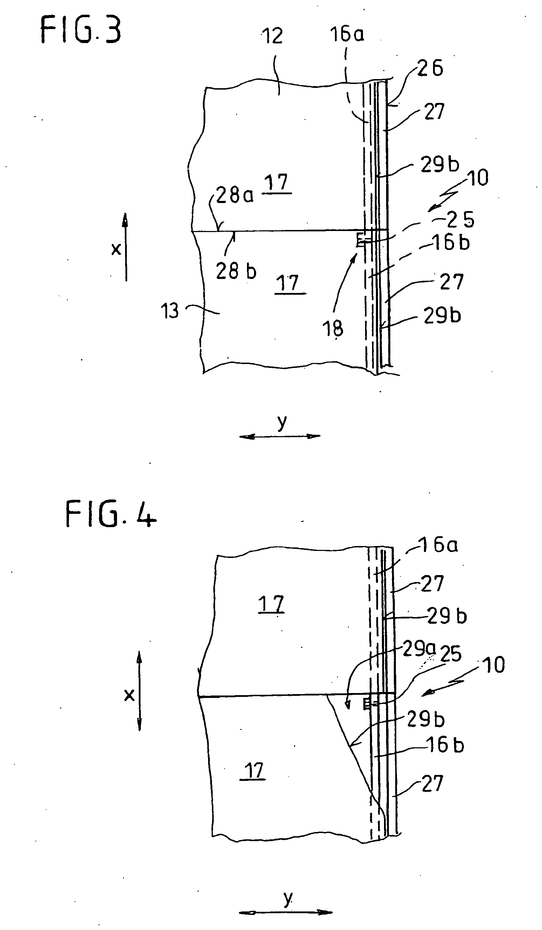

Fig. 3 zeigt gemäß Ausschnittskreis III in Fig. 2 in vergrößerter Darstellung den Verbindungsbereich zwischen dem vorderen Dachelement 12 und dem mittleren Dachelement 13. Fig. 3 zeigt jedoch eine Innenansicht der Dachkonstruktion 10, also entsprechend einer Blickrichtung eines Betrachters von der Fahrgastzelle 20 bei in Gebrauchsstellung befindlicher Dachkonstruktion 10 nach oben.

Jedem Dachelement 12, 13 ist als äußerstes Bauelement eine Dichtung 27 mit einer Außenkante 26 zugeordnet, die mit nicht dargestellten entsprechenden Gegenelementen der Fahrzeugkarosserie zusammenwirkt, wenn die Dachkonstruktion 10 in ihre Gebrauchsstellung überführt wird. Ein enges Aufeinanderliegen der Dichtungselemente 27 mit entsprechenden fahrzeugseitigen Gegenelementen sorgt für eine gewünschte Dichtigkeit, hinsichtlich Wasser, Lärm und Temperatur. Das Dichtungselement 27 ist bezogen auf die Fahrtrichtung x des Kfz das seitlich äußerste Bauelement der Dachkonstruktion 10.

Unmittelbar benachbart der Dichtung 27 befinden sich die Strebenelemente 16a, 16b, die gemäß Fig. 3 lediglich gestrichelt angedeutet sind, da sie vom Innenhimmel 17 vollständig überdeckt sind.

Die beiden Abschnitte des Innenhimmels 17 des Dachelementes 12 und des Dachelementes 13 liegen im Bereich der Stoßkanten 28a, 28b aneinander, so dass die Dachkonstruktion 10 insgesamt ein optisch einheitliches Erscheinungsbild darbietet. Der Innenhimmel 17 erstreckt sich dabei gemäß Fig. 3 bis an das seitlich äußerste Bauelement der Dachkonstruktion 10, im Falle des Ausführungsbeispiels der Fig. 3 bis an die Dichtung 27 heran. Die äußere Kante des Innenhimmels 17 wird mit dem Bezugszeichen 29b bezeichnet. Fig. 3 lässt erkennen, dass zwischen dieser äußersten Kante 29b des Innenhimmels 17 und der Dichtung 27 praktisch nur ein geringer Spalt vorhanden ist, der gegebenenfalls auch durch eine stoßende Berührung vermeidbar ist.

Für den Fall, dass die Dachkonstruktion 10 aus ihrer in den Figuren 1 bis 3 dargestellten Gebrauchsposition in eine komprimierte Nichtgebrauchsstellung überführt werden soll, müssen die Dachelemente 12, 13, 14 relativ zueinander bewegt werden, was eine Bewegung der Elemente 16a, 16b des Lenker-Gestänges 15 voraussetzt. Da der Innenhimmel 17 gemäß Fig. 3 die beiden Elemente 16a und 16b des Lenker-Gestänges 15 vollständig abdeckt, ist eine solche Bewegung zunächst nicht möglich.

Erfindungsgemäß wird nunmehr ein Werkstoffbereich 18, der bei dem Ausführungsbeispiel integraler Bestandteil des Innenhimmels 17 ist, quer zur Fahrtrichtung x des Kfz, also entlang dem Doppelpfeil y, zur Fahrzeugmitte hin verlagert.

Fig. 4 zeigt die Position, in der der Werkstoffbereich 18 unter Ausbildung eines etwa dreieckförmigen Freiraumes 29a in eine geraffte Arbeitsposition verlagert ist. Die Strebe 16b des Lenker-Gestänges 15 sowie das die beiden Strebenabschnitte 16a und 16b miteinander verbindende Gelenk 25 sind gemäß Fig. 4 nunmehr freigegeben und können bei Bedarf aus der Papierebene der Fig. 4 heraus, dem Betrachter entgegen, bewegt werden.

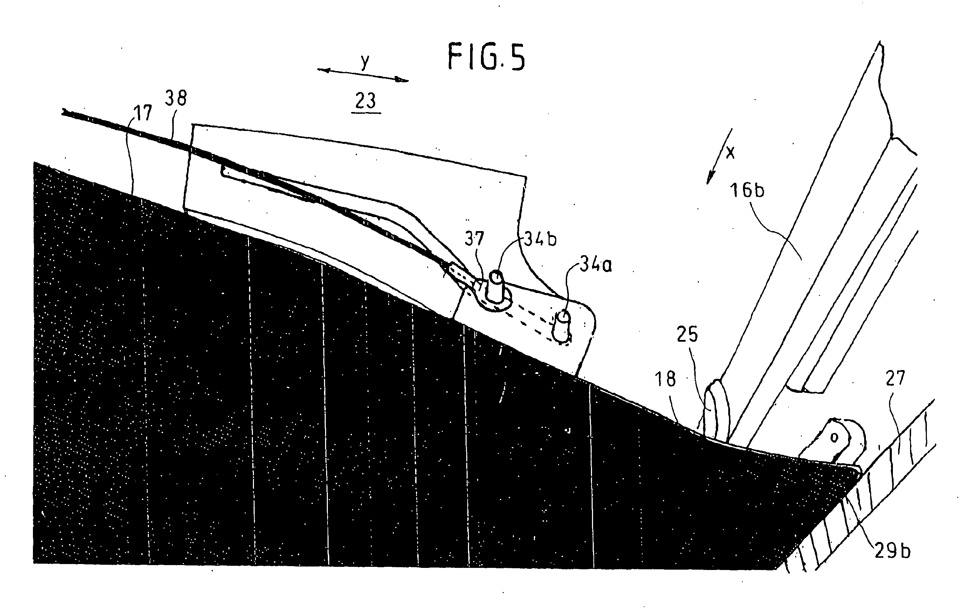

Anhand der Fig. 5 bis 8 soll nunmehr detailliert die Einrichtung beschrieben werden, die die Verlagerung des Werkstoffbereiches 18 aus seiner in Fig. 3 dargestellten Ruheposition in seine in Fig. 4 erläuterte Arbeitsposition bewirkt:

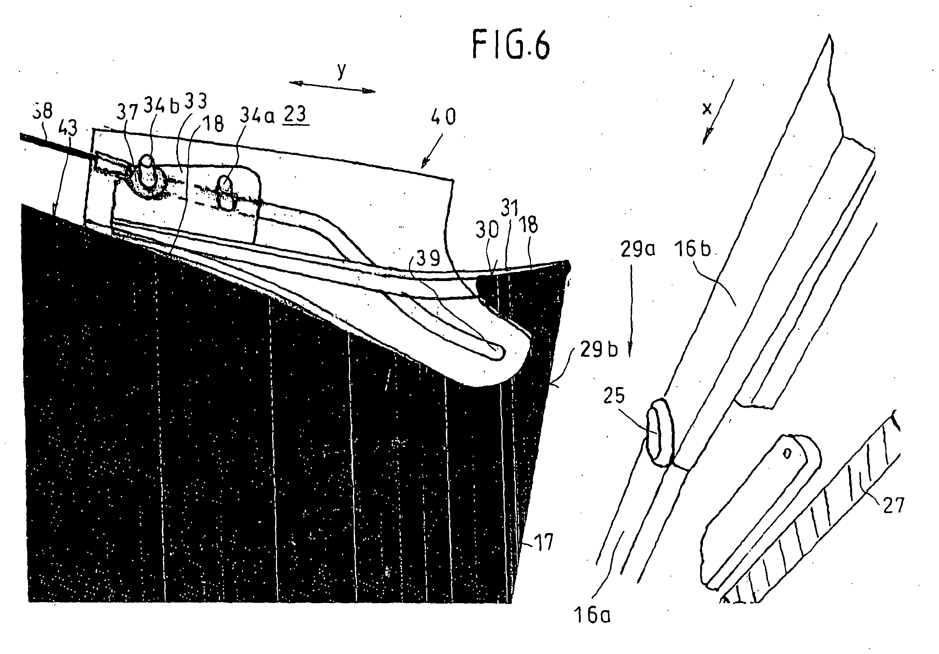

Fig. 5 zeigt in einer perspektivischen Ansicht, schräg von unten, etwa entsprechend der Blickrichtung eines Betrachters aus der Fahrgastzelle heraus nach oben in abgebrochener Teilansicht angedeutet einen Strebenabschnitt 16b und ein Gelenk 25, über das der Strebenabschnitt 16b mit einem weiteren Strebenabschnitt 16a (Fig. 6) verbunden ist. Der abgebrochen dargestellte Innenhimmel 17 reicht bis zu dem Dichtungselement 27.

Zu diesem Ausführungsbeispiel ist anzumerken, dass sich der Innenhimmel 17 selbstverständlich üblicherweise dem Benutzer weiter entgegen erstreckt, also bezüglich Fig. 5 schräg nach oben, so dass der Innenhimmel 17 die in Fig. 5 dargestellten Elemente, bis auf die Dichtung 27, vollständig verdeckt.

Der Werkstoffbereich 18 des Innenhimmels 17 kann aus einer in Fig. 5 dargestellten Ruheposition, in der die Strebenelemente 16a, 16b sowie das Gelenk 25 des Lenker-Gestänges 15 abgedeckt sind, in eine in Fig. 6 dargestellte Arbeitsposition verlagert werden. In Fig. 6 ist deutlich zu sehen, dass der Werkstoffbereich 18 gerafft ist, und einen Freiraum 29a erzeugt, der den Einblick auf und eine Bewegungsbahn für die Strebenelemente 16a, 16b und das Gelenk 25 freigibt.

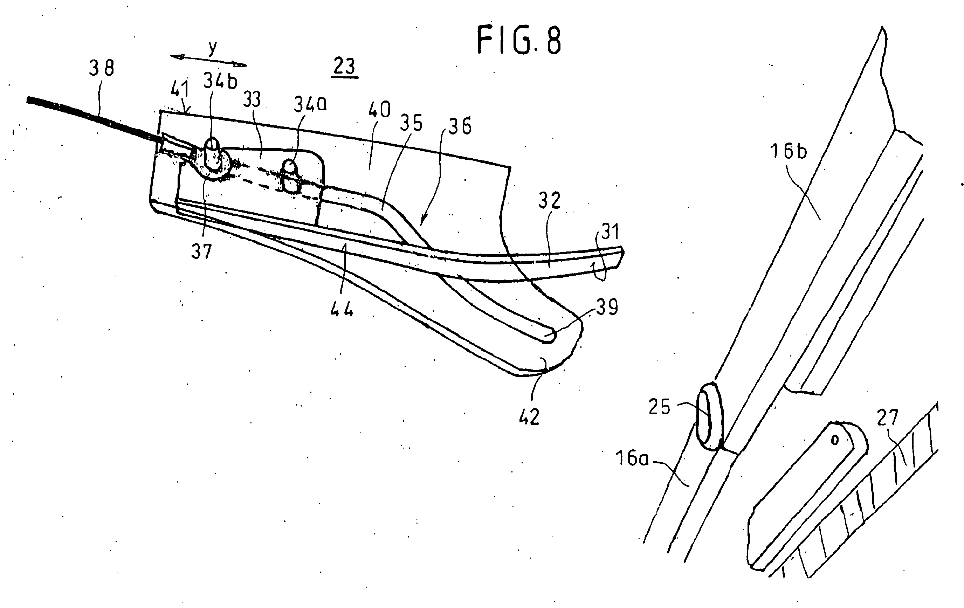

Der Werkstoffbereich 18 ist über einen relativ kleinflächigen Befestigungsabschnitt 30 mit einem Abschnitt 31 einer Steuerzunge 32 verbunden, die am besten aus Fig. 8 ersichtlich ist. Die Steuerzunge 32 ist einstückig bewegungseinheitlich gekoppelt verbunden mit einem Steuerflansch 33. An dem Steuerflansch 33 ist ein Nockenelement 34a vorgesehen, welches in einem Kulissenschlitz 35 in einer Kulissenbahn 36 geführt ist. Das Nockenelement 34a bzw. gemäß den Figuren ein gesondertes, an dem Steuerflansch 33 angeordnetes Element 34b, wird von einer Öse 37 eines Betätigungselementes 38 umgriffen. Das Betätigungselement 38 ist beispielsweise ein Baudenzug, der z.B. einen in Fig. 2 angedeuteten, gestrichpunkteten Verlauf aufweisen kann. Das freie, von der Öse 37 gebildete Ende des Betätigungselementes 38 ist im wesentlichen entlang dem Doppelpfeil y, also im wesentlichen quer zur Fahrtrichtung x des Fahrzeuges bewegbar. Auf diese Weise kann der Steuerflansch 33 gleichermaßen in Fahrzeugquerrichtung y verlagert werden.

Bei in Ruheposition befindlichem Werkstoffbereich 18 befindet sich das Nockenelement 34b in dem fahrzeugseitig äußeren Ende 39 des Kulissenschlitzes 35. Die Kulissenbahn weist dabei einen Verlauf auf, der ausgehend von dem äußeren Ende 39 des Kulissenschlitzes 35 zunächst verhältnismäßig stark ansteigt und anschließend flacher verläuft. Die Bedeutung dieses Verlaufes wird später noch erläutert.

Die Einrichtung 40, die die Kulissenbahn aufweist, ist zwischen der Dachaußenhaut 23, die sich ein Betrachter der Fig. 8 etwa oberhalb der Oberseite 41 vorstellen muss, und dem Innenhimmel 17 (Fig. 6) angeordnet. Die Einrichtung 40 weist einen nasenartigen Vorsprung 42 auf, der zur Fahrzeugaußenseite hinragt (Fig. 8).

Der Innenhimmel 17 ist über einen Großteil der Breite (entlang Doppelpfeil Y) der Dachkonstruktion 10 fest mit dem jeweiligen Dachelement 12, 13, 14 verbunden, und beispielsweise an einer nicht näher dargestellten Kunststoffunterschale befestigt, z.B. festgeklebt. Dieser Bereich, in dem der Innenhimmel 17 an dem Dachelement befestigt ist, erstreckt sich ausgehend von der Fahrzeugmitte des Kfz 11 etwa bis zu einem Bereich 43 (Fig. 6), also bis kurz vor die Einrichtung 40 heran. Im Bereich des Werkstoffbereiches 18, der etwa bezüglich Fig. 6 rechtsseitig des Bereiches 43 des Innenhimmels 17 beginnt, ist der Innenhimmel 17 zunächst lose angeordnet und liegt bei in Ruheposition befindlichem Werkstoffbereich 18 gemäß Fig. 5 über die gesamte axiale Länge der Steuerzunge 32 an deren Unterseite 44 lose an.

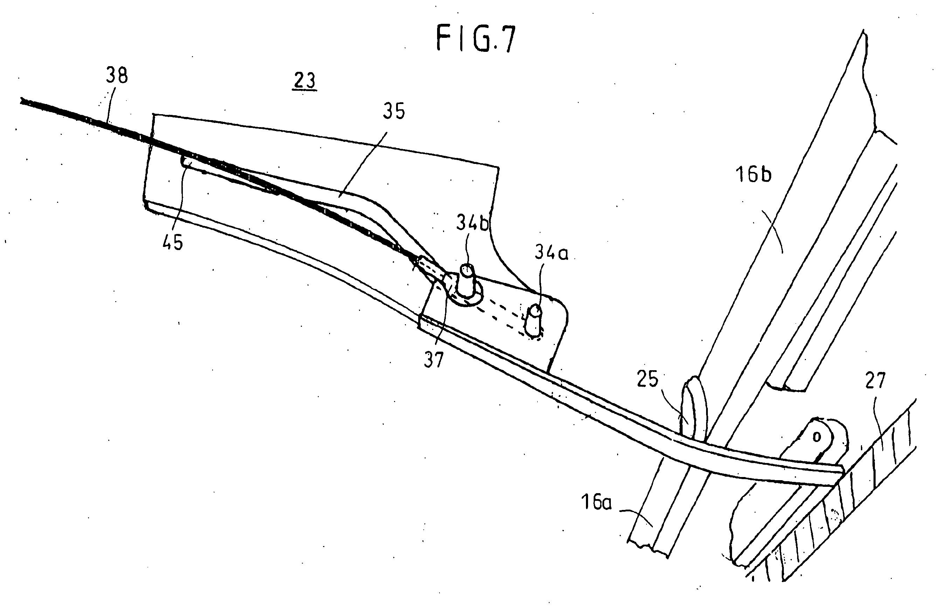

Für den Fall, dass die Steuerzunge 32 ausgehend von einer Position gemäß den Figuren 5 und 7 in eine Position gemäß den Figuren 6 und 8 überführt wird, fährt das Nockenelement 34b den Kulissenschlitz 35 entlang. Aufgrund der starken Steigung des Kulissenschlitzes und aufgrund der beabstandeten Anordnung von Nockenelement 34b und dem Bolzen 34a vollführt die Steuerzunge 32 und damit auch ein Teil des Werkstoffbereiches 18 eine geringfügige Schwenkbewegung, die dafür sorgt, dass der Befestigungsabschnitt 31 der Steuerzunge 32 von den Strebenabschnitten 16a, 16b sehr schnell wegbewegt wird, und zwar einerseits zur Fahrzeugmitte hin, und andererseits zugleich auch bezüglich des Kfz nach unten. Aufgrund dieser kombinierten Bewegung, die insgesamt zu einer translatorischen Schwenkbewegung der Steuerzunge führt, wird der Freiraum 29 sehr schnell freigegeben, so dass unmittelbar nachfolgend der Strebenabschnitt 16a oder 16b bzw. auch das Gelenk 25 aus dem Freiraum 29a ohne Behinderung durch den Werkstoffbereich 18 heraustreten kann.

Bei der weiteren Einfahrbewegung des Werkstoffbereiches 18 wird die Sperrzunge 32 zunehmend bezüglich Fig. 5 nach links verlagert und erreicht schließlich ihre in Fig. 6 dargestellte Arbeitsposition, in der das Nockenelement 34b an dem anderen Ende 45 des Kulissenschlitzes 35 anliegt.

Der Werkstoffbereich 18 hintergreift in dieser Arbeitsposition den nasenartigen Vorsprung 42 der Einrichtung 40, und ist dabei, zumindest geringfügig, gerafft. Es bilden sich somit verschiedene Faltungen im Bereich des Werkstoffbereiches 18, so dass dieser platzsparend aufgenommen ist, durch eine lose Faltung aber die Entstehung von Knickfaltungen verhindert wird.

Die Einrichtung 40 ist in den Figuren lediglich schematisch dargestellt und selbstverständlich gleichermaßen auch auf der gegenüberliegenden Fahrzeugseite angeordnet, so dass sich insgesamt eine bezüglich der Längsmittelachse des Fahrzeuges 11 symmetrische Anordnung der Dachkonstruktion und des Lenker-Gestänges 15 mit zwei Einrichtungen 40 ergibt.

Vorzugsweise ist das Betätigungselement 38 bzw. die Einrichtung 40 mit dem Lenker-Gestänge 15 wirkverbunden, derart, dass bei einer Bewegung des Lenker-Gestänges 15 zur Verlagerung der Dachkonstruktion 10 aus ihrer Arbeitsposition in eine Nicht-Gebrauchsposition bzw. umgekehrt zugleich eine entsprechende Verlagerung des Betätigungselementes 38 erfolgt. Diese Wirkverbindung ist vorzugsweise mechanisch und das Betätigungselement 38 auf diese Art nach Art eines Gestänges wirksam. Gleichermaßen kann als Betätigungselement 38 aber auch eine elektromotorische, pneumatische, hydraulische oder sonstige Antriebseinrichtung mit einer entsprechenden Wirkverbindung vorgesehen sein.

Bei einer vorzugsweise symmetrischen Anordnung der Dachkonstruktion 10 sind üblicherweise zwei Werkstoffbereiche 18 vorgesehen, die verlagerbar sind. Selbstverständlich können aber je nach Bedarf auch mehrere Werkstoffbereiche 18 angeordnet werden, die zwischen einer Ruheposition und einer Arbeitsposition verlagerbar sind, wobei deren Anbringung und Positionierung grundsätzlich an denjenigen Stellen erfolgen soll, an denen Elemente des Lenker-Gestänges 15 derartig erhabene Relativbewegungen zu dem jeweiligen Dachelement 12, 13, 14 vollführen, dass sie deutlich aus dem für sie vorgesehenen Einbauraum heraustreten.

Die Anordnung einer gesonderten Einrichtung 40 zur Verlagerung des Werkstoffbereiches 18, die separat von dem Lenker-Gestänge 15 vorgesehen ist, ermöglicht eine unabhängige Gestaltung der Einrichtung 40 zur Verlagerung des Werkstoffbereiches, ohne dass irgendwelche Betätigungselemente 38 im Bereich sich relativ zueinander bewegender Teile des Lenker-Gestänges 15 angeordnet werden müssen und Bewegungen der Elemente 16a, 16b des Lenker-Gestänges 15 stören. Die Wirkverbindung zwischen der Einrichtung 40 und dem Lenker-Gestänge 15 kann an einem beliebigen Ort, beispielsweise im Bereich der Anbindung des hinteren Dachelementes 14 an die Karosserie erfolgen. Schließlich kann als Wirkverbindung auch eine elektronische Steuerung mit einem Sensor vorgesehen sein, die beispielsweise die räumliche Lage des Lenker-Gestänges 15 erfasst.

Die vorgeschlagene Einrichtung 40 zur Verlagerung des Werkstoffbereiches 18 kann ohne weiteres derart ausgelegt werden, dass die Außenkante 29b des Werkstoffbereiches 18, und damit auch des Innenhimmels 17, gegen die Dichtung 27 oder ein anderes, am Dachelement 12, 13, 14 vorgesehenes Bauelement derart stark gedrückt wird, dass ein vollständig dichter Abschluss der Fahrgastzelle erreicht wird.

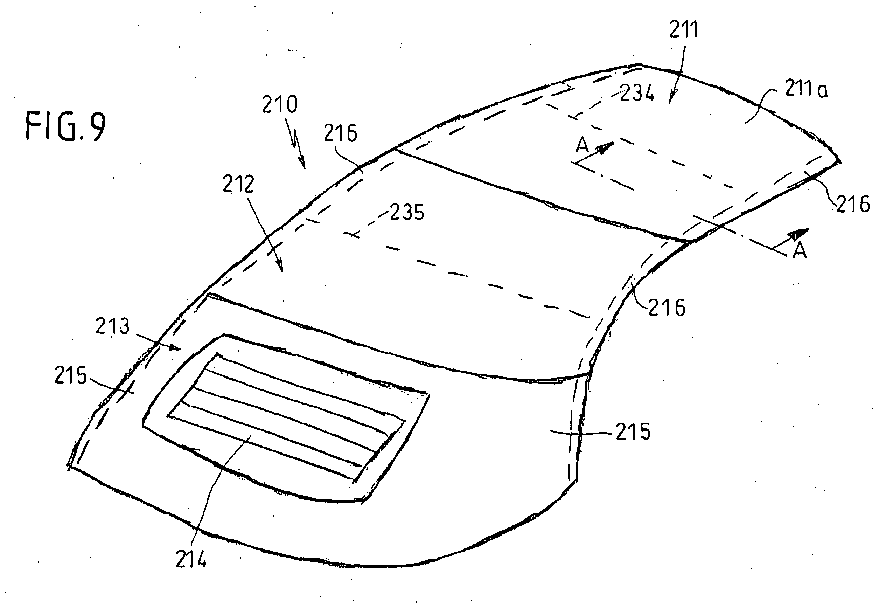

Das in Fig. 9 dargestellte und insgesamt mit 210 bezeichnete Klappverdeck oder Klappdach umfasst bei diesem weiteren Ausführungsbeispiel drei feste Dachteile 211, 212 und 213. Das Dachteil 211 ist das fahrzeugvorderste. Im geschlossenen Zustand legt sich sein vorderer Rand 211a auf den oberen Rahmen der nicht dargestellten Windschutzscheibe bzw. A-Säule des mit dem Klappdach versehenen, gleichfalls nicht gezeigten Fahrzeugs. Bezüglich des Fahrzeugs nach hinten schließt sich das zweite feste Dachteil 212 als Mittelteil an und daran das dritte Dachteil 213 als Heckteil. Dieses beinhaltet eine Heckscheibe 214. Die beiden seitlichen Abschnitte 215 dieses hintersten Dachteils 214 werden in der Regel auch als C-Säulen bezeichnet.

Fig. 9 zeigt das Klappverdeck 210 im geschlossenen Zustand, wobei also das Dachteil 211 zum Dachteil 212 und dieses Dachteil 212 zum Dachteil 213 jeweils bündig übergeht. Seitliche Randbereiche des Verdecks sind mit 216 bezeichnet, wobei es sich um diejenigen Bereiche handelt, in denen Gestängeelemente untergebracht sind, welche die drei Dachteile 211, 212 und 213 sowie letztlich auch das Verdeckteil 213 mit der Karosserie gelenkig und bewegungskinematisch zueinander verbinden.

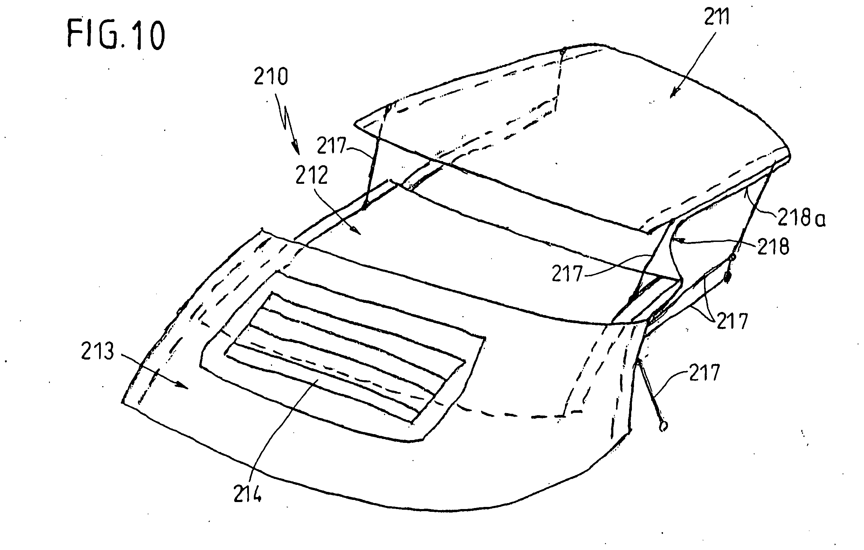

Gestängeelemente 217 sind schematisch in Fig. 10 angedeutet, in der sich gegenüber der Darstellung in Fig. 9 nunmehr das vorderste feste Dachteil 211 angehoben hat und das zweite mittlere feste Dachteil 212 zum Teil unter das hintere feste Dachteil 213 verlagert hat. Es handelt sich hier um eine Zwischenstufe eines Öffnungs- oder Schließvorgangs des Verdecks 210.

Mit 218 ist ein Innenhimmel bezeichnet, der sich im geschlossenen Zustand des Verdecks 210 nahezu über die gesamte Verdeckbreite erstreckt und zwar im wesentlichen vollflächig unter dem vorderen festen Dachteil 211 sowie dem mittleren festen Dachteil 212 und zu einem geringen Anteil (etwa bis zum oberen Rand der Heckscheibe 214) in das dritte feste Dachteil 213 hinein. Der Innenhimmel 218 besteht aus einer biegeschlaffen Bahn, insbesondere Gewebebahn, einem sogenannten "Himmelstoff", wie er für bislang auch bei herkömmlichen Cabriolets mit Soft-Top gebräuchlich ist. Die Längsränder 218a des Innenhimmels 218 reichen etwa bis an die Randkanten der festen Dachelemente 211 und 212 sowie gegebenenfalls eines Teils von 213 heran.

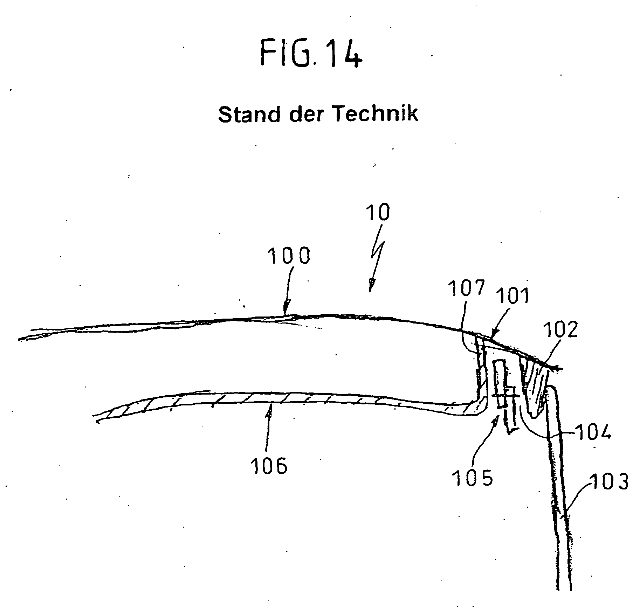

Die der Erfindung zugrundeliegende Problematik sei nun zunächst anhand der Fig. 14 erläutert, die einen Teilquerschnitt durch ein Klappverdeck des Standes der Technik schematisch darstellt.

In Fig. 14 ist mit 100 die Außenhaut eines festen Dachteils bezeichnet, wobei es sich um ein vorderes, mittleres oder hinteres festes Dachteil handeln kann. Die Dachhaut 100 besteht aus Stahl oder Aluminiumblech und kann, abweichend von der Darstellung der Fig. 14, auch zwei- oder mehrschalig ausgebildet sein. Im seitlichen Randbereich 101 des festen Dachteils 100 erstreckt sich unter der Außenhaut 100 ein insbesondere streifenförmiges Dichtelement 102 zur Abdichtung des Innenraums bei hochgefahrener Seitenscheibe 103. Diesem Dichtelement 102 zum Fahrzeuginnern benachbart befindet sich ein Spalt 104 zur Aufnahme von Gestängeelementen 105, die Bestandteil der Schließ- und Öffnungsbewegungsmechanik des Klappverdecks 210 sind. Funktionsnotwendig ist der Spalt 104 nach unten hin offen, um das notwendige Austreten zumindest von Teilen der Gestängeelemente 105 während ihres Bewegungsablaufs beim Öffnen und Schließen des Verdecks zu ermöglichen.

Auf der Innenseite der Dachhaut 100 befindet sich ein festes Verkleidungsteil 106, welches einen Himmel bildet und die Aufgabe hat, ein optisch ansprechendes Erscheinungsbild im Innern des Fahrzeugs zu vermitteln sowie zur Schall- und Temperaturisolierung beizutragen. Bei diesem Verkleidungsteil 106 handelt es sich um ein steifes Formteil, das in der Regel aus Kunststoff besteht und mit der Dachhaut 100 fest verbunden ist. Den Gestängeelementen 105 dicht benachbart umfasst das Verkleidungselement 106 einen nach oben zur Dachhaut 100 hin gerichteten Randbereich 107. Dieser Randbereich 107 ist mit seiner dortigen Anordnung erforderlich, damit sich die Gestängeelemente 105 während des Schließen des Klappverdecks behinderungsfrei nach oben in den Spalt 105 hinein bzw. beim Öffnen des Verdecks aus diesem heraus bewegen können.

Die Tatsache, dass durch diese Konstruktion bedingt Gestängeelemente 105 zwangsläufig vom Fahrzeuginnenraum her zu sehen sind, wird häufig als störend empfunden.

Hier setzt die Erfindung ein und schafft eine einfache und sicher funktionierende Abdeckung des Spaltes 104 wie folgt:

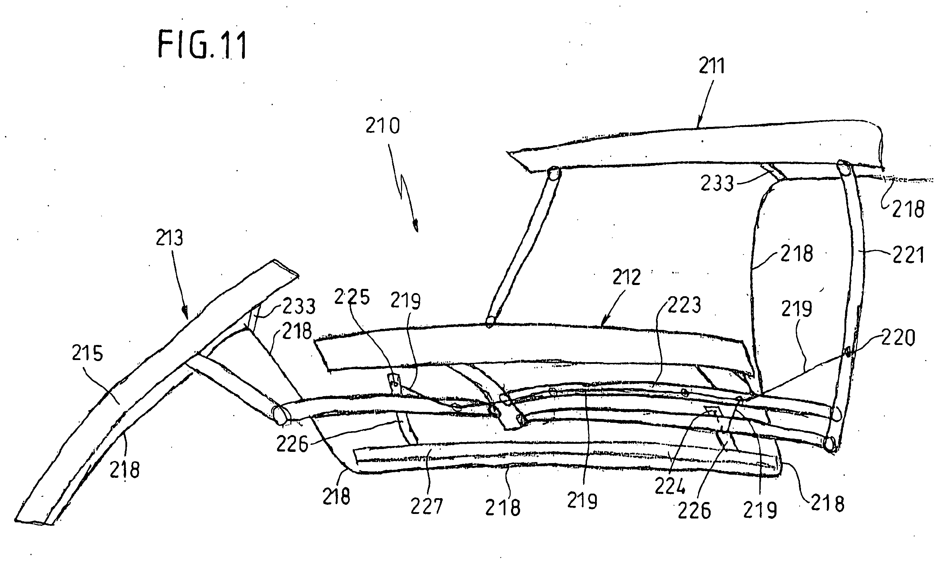

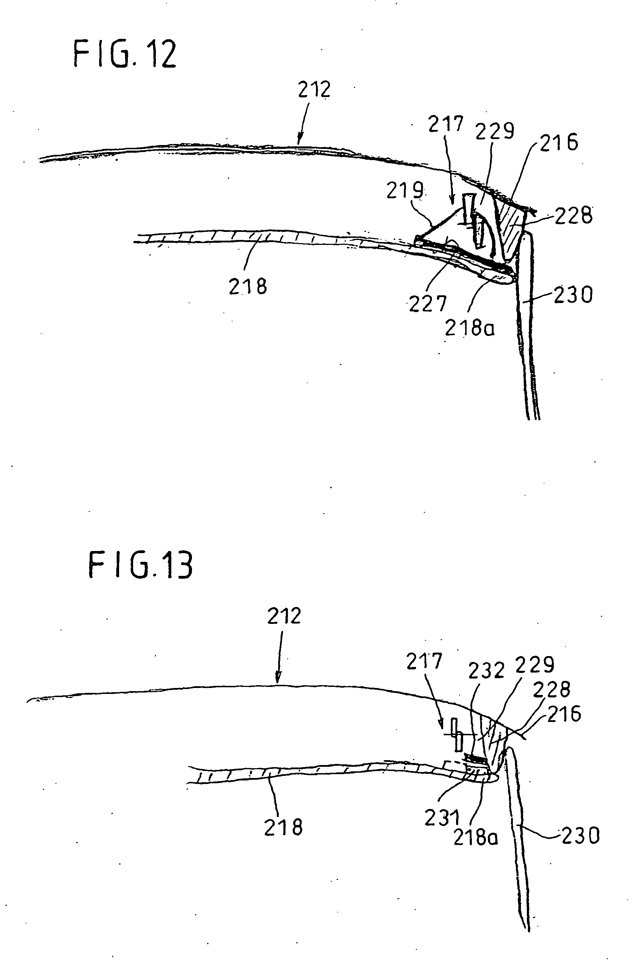

Nach einer weiteren Ausführungsform, die in den Fig. 11 und 12 schematisch dargestellt ist, ist - an jeder Verdecklängsseite - wenigstens ein vorzugsweise biegeschlaffes Zugelement 219 wie Seil, Band, Kordel, Gummischnur od.dgl. einenends (bei 220) an einem Gestängeteil 221, z.B. einem sog. Umlenker, fest angeschlossen. Das Zugelement 219 ist sodann durch Zugelementführungen 222 längs eines weiteren Gestängeelements 223 geführt - das, wie ersichtlich, Teil einer viergelenkigen Parallelogramm-Lenker-Anordnung ist - und greift - beim Ausführungsbeispiel an zwei Stellen 224 und 225 - mindestens mittelbar am Himmelstoff 218 an. Dieser Angriff erfolgt beim gezeichneten Ausführungsbeispiel über Verbindungslaschen 226, die ihrerseits mit einem streifenförmigen Formteil 227 verbunden sind, das randlich auf der Innenseite des Innenhimmels 218 an diesem befestigt ist. Diese Befestigung kann insbesondere durch Annähen oder Einnähen in einen Saum erfolgen.

Wird das Zugelement 219 beim Schließen des Verdecks 210 mittels des Umlenkers 221, der Teil eines Kniehebelmechanismus des Verdeckgestells ist, auf Zug beansprucht, hat dies zur Folge, dass die Randpartie 218a des Himmels 218 - bezüglich Fig. 11 und Fig. 12 nach oben - zum festen Dachteil (hier beispielsweise zum Dachteil 212) hin gezogen wird. Wie Fig. 12 veranschaulicht, gelangt dadurch der fahrzeuglängsseitige Randbereich 218a des Himmels 218 gegen eine am Rand 216 des festen Dachteils 212 angeordnete Dichtlippe 228, und der Randbereich 218a des Innenhimmels 218 verschließt den ansonsten und beim Stand der Technik nach unten offenen Spalt 229 auf der der Seitenscheibe 230 abgewandten Innenseite der Dichtung 228.

Fig. 12 zeigt die Anordnung bei geschlossenem Verdeck, d.h. also bei gespannten Gestängeelementen 217. Wird das Klappdach 210 geöffnet, wird das Zugelement 219 durch die Öffnungsbewegung des Gestänges 217 entspannt, die seitlichen Randpartien 218a des Himmels 218 geben dadurch den Spalt 229 nach unten frei, d.h. sie treten aus der Bewegungsbahn der Gestängeelemente 217 heraus, so dass die Gestängeelemente 217 aus diesem Spalt 229 austreten und sich frei bewegen können, ohne den Randbereich 218a des Himmels 218 zu beschädigen.

Fig. 13 zeigt ein Ausführungsbeispiel, bei dem am Innenhimmel 218 auf dessen zum festen Dachteil 212 weisenden Seite ein insbesondere streifenförmiger Einleger 231 aus ferromagnetischem Metall vorgesehen ist. Dachteilfest, z.B. mit der Dichtlippe 228 verbunden oder in deren Nachbarschaft befestigt, ist korrespondierend ein Magnetstreifen 232 vorgesehen, den der ferromagnetische Streifen im Schließzustand der Verdecks 210 bündig unterfängt. Die beiden miteinander korrespondierenden Streifen 231 und 232 bilden somit einen 'Magnetverschluss'.

Der Einleger 231 kann auf dem Innenhimmel 218 aufgeklebt, aufgenäht oder in ihn eingenäht sein.

Dabei ist in erster Linie daran gedacht, dass sich beim Schließvorgang des Klappverdecks die Funktionselemente 231 und 232 des Magnetverschlusses von selbst einander so weit nähern, dass die Schließstellung dann durch selbsttätiges Anhaften der Teile 231 und 232 automatisch erfolgt. Beim Öffnen des Verdecks wird durch leichten Druck des Gestänges 217 gegen den Himmel 218 oder gegen einen in Fig. 13 gestrichelt dargestellten inneren Überstand des ferromagnetischen Streifens 231 dieser Verschluss 231/232 wieder geöffnet.

Fig.13 zeigt diese "Magnetverschluss"-Einrichtung ohne die zuvor beschriebene Mechanik des spaltverschließenden Himmel-Randbereiches 218a über ein Zugmittel 219. Gleichwohl kann die Magnetverschluss-Einrichtung aber auch zusätzlich, also ergänzend und unterstützend zur Anordnung nach Fig. 11 und 12 eingesetzt werden.

Abschließend sei darauf hingewiesen, dass mittlere Partien des Himmels 218 in an sich bekannter Weise über insbesondere streifenförmige Spriegelanbindungen 233 (Fig. 11) dachteilfest verspannt sind. Solche Spriegel sind bei sogenannten Soft-Tops bekannt und in Fig. 9 schematisch durch die gestrichelten Linien 234 und 235 angedeutet.

## Patentansprüche

1. Dachkonstruktion (10, 210) für Kraftfahrzeuge (11), umfassend wenigstens ein an die Karosserie des Fahrzeuges angebundenes, im wesentlichen formsteif ausgebildetes, einen Innenhimmel (17, 218) aufweisendes Dachelement (12, 13, 211, 212, 213), welches von einer Nicht-Gebrauchsstellung mittels eines Lenker-Gestänges (15, 217) in eine Gebrauchsstellung überführbar ist, **dadurch gekennzeichnet, dass** dem Innenhimmel (17, 218) ein Werkstoffbereich (18, 218a) zugeordnet ist, der zwischen einer das Lenker-Gestänge im wesentlichen verdeckenden Ruheposition (Fig. 5) und einer das Lenker-Gestänge zumindest teilweise freigebenden Arbeitsposition (Fig. 6) verlagerbar ist, wobei der Werkstoffbereich mit dem Innenhimmel einstückig-stoffschlüssig verbunden ist.

2. Dachkonstruktion für Kraftfahrzeuge nach Anspruch 1, **dadurch gekennzeichnet, dass** der Werkstoffbereich (18) im wesentlichen entlang einer Fahrzeugquerrichtung (y) verlagerbar ist.

3. Dachkonstruktion für Kraftfahrzeuge nach Anspruch 1 oder 2, **dadurch gekennzeichnet, dass** der Innenhimmel entlang einem Großteil der Breite des Dachelementes (12, 13, 211, 212, 213) fest mit dem Dachelement verbunden ist.

4. Dachkonstruktion für Kraftfahrzeuge nach einem der vorangegangenen Ansprüche, **dadurch gekennzeichnet, dass** der Werkstoffbereich (18, 218a) relativ zu dem Dachelement flexibel ausgebildet ist.

5. Dachkonstruktion für Kraftfahrzeuge nach einem der vorangegangenen Ansprüche, **dadurch gekennzeichnet, dass** wenigstens ein zweites formsteif ausgebildetes Dachelement vorgesehen ist, welches relativ zu dem ersten Dachelement bewegbar ist, wobei der Werkstoffbereich (18, 218a) nahe einer Stoßkante (28a, 28b) zwischen dem ersten und dem zweiten Dachelement angeordnet ist.

6. Dachkonstruktion für Kraftfahrzeuge nach einem der vorangegangenen Ansprüche, **dadurch gekennzeichnet, dass** dem Dachelement eine Einrichtung (40, 219, 231, 232) zur Verlagerung des Werkstoffbereiches zugeordnet ist.

7. Dachkonstruktion für Kraftfahrzeuge nach Anspruch 6, **dadurch gekennzeichnet, dass** die Einrichtung den Werkstoffbereich bei dessen Überführung von der Ruheposition in die Arbeitsposition rafft.

8. Dachkonstruktion für Kraftfahrzeuge nach Anspruch 6 oder 7, **dadurch gekennzeichnet, dass** die Einrichtung (40; 291, 231, 232) mit dem Lenker-Gestänge (15) wirkverbunden ist.

9. Dachkonstruktion für Kraftfahrzeuge nach einem der Ansprüche 6 bis 8, **dadurch gekennzeichnet, dass** die Einrichtung mit dem Lenker-Gestänge mechanisch verbunden ist.

10. Dachkonstruktion für Kraftfahrzeuge nach einem der Ansprüche 6 bis 9, **dadurch gekennzeichnet, dass** die Einrichtung ein in Fahrzeugquerrichtung verfahrbares Steuerelement, insbesondere einen Steuerflansch (33), aufweist.

11. Dachkonstruktion für Kraftfahrzeuge nach Anspruch 10, **dadurch gekennzeichnet, dass** der Steuerflansch mit dem Werkstoffbereich insbesondere abschnittsweise verbunden ist.

12. Dachkonstruktion für Kraftfahrzeuge nach Anspruch 10 oder 11, **dadurch gekennzeichnet, dass** dem Steuerflansch ein Nockenelement (34a, 34b) zugeordnet ist, welches in einer fahrzeugfesten Kulisse (35, 36) geführt ist.

13. Dachkonstruktion für Kraftfahrzeuge nach einem der vorangegangenen Ansprüche, **dadurch gekennzeichnet, dass** bei einer Verlagerung des Dachelementes aus seiner Nicht-Gebrauchsstellung in die Gebrauchsstellung der Werkstoffbereich aus der Ruheposition in die Arbeitsposition verfährt.

14. Dachkonstruktion für Kraftfahrzeuge nach einem der vorangegangenen Ansprüche 6 bis 9, bzw. nach Anspruch 13 soweit dieser auf Anspruch 6 rückbezogen ist, **dadurch gekennzeichnet, daß** die Einrichtung (40, 219) zur Verlagerung des Werkstoffbereiches von einem biegeschlaffen Zugmittel, wie z.B. Bänder, Kordeln, Seile oder Gummizug gebildet ist.

15. Dachkonstruktion für Kraftfahrzeuge nach einem der vorangegangenen Ansprüche, **dadurch gekennzeichnet, daß** der Werkstoffbereich in seiner das Lenkergestänge im wesentlichen verdeckenden Ruheposition von einer Magnetanordnung gehalten ist.

## Claims

1. Roof structure (10, 210) for motor vehicles (11), said structure comprising at least one roof element (12, 13, 211, 212, 213) which is attached to the body of the vehicle, is of essentially dimensionally rigid construction and has an internal headlining (17, 218) and which can be transferred by means of a guide-rod linkage (15, 217), from an out-of-use position into a position of use,
**characterised in that** there is associated with the internal headlining (17, 218) an area of material (18, 218a) which can be displaced between an inoperative position (Fig. 5) which essentially conceals the guide-rod linkage, and a working position (Fig. 6) which leaves said. guide-rod linkage at least partially unobstructed, whereby the area of material is connected to the internal headlining in one piece/in a manner incorporated into the material thereof.

2. Roof structure for motor vehicles according to claim 1, **characterised in that** the area of material (18) is displaceable essentially along a transverse direction (y) of the vehicle.

3. Roof structure for motor vehicles according to claim 1 or 2, **characterised in that** the internal headlining is fixedly connected to the roof element (12, 13, 211, 212, 213) along a major part of the breadth of said roof element.

4. Roof structure for motor vehicles according to one of the preceding claims, **characterised in that** the area of material (18, 218a) is of flexible construction, relative to the roof element.

5. Roof structure for motor vehicles according to one of the preceding claims, **characterised in that** at least one second roof element of dimensionally rigid construction is provided, which is movable relative to the first roof element, the area of material (18, 218a) being arranged close to an abutting edge (28a, 28b) between the first roof element and the second roof element.

6. Roof structure for motor vehicles according to.one of the preceding claims, **characterised in that** an apparatus (40, 219, 231, 232) for displacing the area of material is associated with the roof element.

7. Roof structure for motor vehicles according to claim 6, **characterised in that** the apparatus gathers up the area of material when the latter is transferred from the inoperative position into the working position.

8. Roof structure for motor vehicles according to claim 6 or 7, **characterised in that** the apparatus (40, 291, 231, 232) is operatively connected to the guide-rod linkage (15).

9. Roof structure for motor vehicles according to one of claims 6 to 8, **characterised in that** the apparatus is mechanically connected to the guide-rod linkage.

10. Roof structure for motor vehicles according to one of claims 6 to 9, **characterised in that** the apparatus has a control element, in particular a control flange (33), which is capable of travelling in the transverse direction of the vehicle.

11. Roof structure for motor vehicles according to claim 10, **characterised in that** the control flange is connected to the area of material, particularly in certain sections.

12. Roof structure for motor vehicles according to claim 10 or 11, **characterised in that** a pin element (34a, 34b), which is guided in a gate (35, 36) integral with the vehicle, is associated with the control flange.

13. Roof structure for motor vehicles according to one of the preceding claims, **characterised in that** the area of material travels out of the inoperative position and into the working position when the roof element is displaced out of its out-of-use position and into the position of use.

14. Roof structure for motor vehicles according to one of the preceding claims 6 to 9, or according to claim 13 where said claim is referred back to claim 6, **characterised in that** the apparatus (40, 219) for displacing the area of material is formed by a traction means of low flexural strength, such as, for example, tapes, cords, cables or a rubber pull.

15. Roof structure for motor vehicles according to one of the preceding claims, **characterised in that** the area of material is held in its inoperative position, which essentially conceals the guide-rod linkage, by a magnetic arrangement.

## Revendications

1. Construction de toit (10, 210) pour des véhicules automobiles (11), comprenant au moins un élément de toit (12, 13, 211, 212, 213) attaché à la carrosserie du véhicule, présentant essentiellement une rigidité de forme et présentant un pavillon intérieur (17, 218), élément de toit susceptible d'être passé d'une position de non utilisation, au moyen d'une tringlerie à bras articulés (15, 217), en une position d'utilisation, **caractérisée en ce qu'**au pavillon intérieur (17, 218) est associée une zone de matériau (18, 218a) déplaçable entre une position de repos (Fig. 5) couvrant pratiquement la tringlerie à bras articulés et une position de travail (Fig. 6) libérant au moins partiellement la tringlerie à bras articulés, la zone de matériau est reliée au pavillon intérieur d'une seule pièce, par une liaison par la matière.

2. Construction de toit pour des véhicules automobiles selon la revendication 1, **caractérisée en ce que** la zone de matériau (18) est déplaçable sensiblement le long d'une direction transversale (y) du véhicule.

3. Construction de toit pour des véhicules automobiles selon la revendication 1 ou 2, **caractérisée en ce que** le pavillon intérieur est relié rigidement' à l'élément de toit, le long d'une grande partie de la largeur de l'élément de toit (12, 13, 211, 212, 213).

4. Construction de toit pour des véhicules automobiles selon l'une des revendications précédentes, **caractérisée en ce que** la zone matériau (18, 218a) est flexible par rapport à l'élément de toit.

5. Construction de toit pour des véhicules automobiles selon l'une des revendications précédentes, **caractérisée en ce qu'**au moins un deuxième élément de toit à rigidité de forme est prévu, déplaçable par rapport au premier élément de toit, la zone de matériau (18, 218a) étant disposée à proximité d'un bord de jointoiement (28a, 28b) entre le premier et le deuxième élément de toit.

6. Construction de toit pour des véhicules automobiles selon l'une des revendications précédentes, **caractérisée en ce qu'**à l'élément de toit est associé un dispositif (40, 219, 231, 232) pour le déplacement de la zone de matériau.

7. Construction de toit pour des véhicules automobiles selon la revendication 6, **caractérisée en ce que** le dispositif tend la zone de matériau lors de son passage de la position de repos à la position de travail.

8. Construction de toit pour des véhicules automobiles selon la revendication 6 ou 7, **caractérisée en ce que** le dispositif (40, 219, 231, 232) est relié fonctionnellement à la tringlerie à bras articulés (15).

9. Construction de toit pour des véhicules automobiles selon l'une des revendications 6 à 7, **caractérisée en ce que** le dispositif est relié mécaniquement à la tringlerie à bras articulés.

10. Construction de toit pour des véhicules automobiles selon l'une des revendications 6 à 9, **caractérisée en ce que** le dispositif présente un élément de commande déplaçable dans la direction transversale du véhicule, en particulier une bride de commande (33).

11. Construction de toit, pour des véhicules automobiles selon la revendication 10, **caractérisée en ce que** la bride de commande est reliée à la zone de matériau, en particulier est reliée par tronçons.

12. Construction de toit pour des véhicules automobiles selon la revendication 10 ou 11, **caractérisée en ce qu'**à la bride de commande est associé un élément de came (34a, 34b), guidé dans une coulisse (35, 36) fixée au véhicule.

13. Construction de toit pour des véhicules automobiles selon l'une des revendications précédentes, **caractérisée en ce que**, lors d'un déplacement de l'élément de toit d'une position de non utilisation à la position d'utilisation, la zone de matériau se déplace de la position de repos à la position de travail.

14. Construction de toit pour des véhicules automobiles selon l'une des revendications 6 à 9 précédentes, respectivement selon la revendication 11, dans la mesure où celle-ci se réfère à la revendication 6, **caractérisée en ce que** le dispositif (40, 219) de déplacement de la zone de matériau est formé par un moyen de traction présentant de la mollesse en flexion, tel que par exemple des bandes, des cordelettes, des câbles ou un ressort de traction en caoutchouc.

15. Construction de toit pour des véhicules automobiles selon l'une des revendications précédentes, **caractérisée en ce que** la zone de matériau est maintenue à sa position de repos, couvrant pratiquement la tringlerie à bras articulé, par un agencement magnétique.
